# EUROPEAN PATENT APPLICATION

(11) **EP 4 607 823 A1**
(43) Date of publication of application: **27.08.2025**
(21) Application number: 24158685.8
(22) Date of filing: 20.02.2024
(51) Int. Cl.: H04B 10/272, H04B 10/40, H04J 14/02, H04Q 11/00

(54) **METHOD AND APPARATUS FOR WAKING UP AN ONU**

(71) Applicant: Nokia Solutions and Networks Oy, 02610 Espoo (FI)
(72) Inventor: Staub, Michael, 75433 Maulbronn (DE); Bonk, Rene, 75181 Pforzheim (DE)
(74) Representative: Zinsinger, Norbert

(57) **Abstract**

The present invention discloses an apparatus for use in an Optical Network Unit, ONU, communicatively connected to an Optical Line Terminal, OLT, comprising means for: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change. The present invention discloses an apparatus for use in an OLT communicatively connected to a plurality of ONUs, comprising means for: varying an average output power of a PON downstream signal for a predetermined duration based on a determination of waking up at least one ONU from a deep sleep mode.

## Description

### Field of the invention

Various example embodiments relate to communication technology, specifically to optical network.

### Background

Normally, in a passive optical network (PON), the optical network units (ONUs) are always kept active. In order to save power consumption, some special operation states are proposed for ONUs.

US2017302380A1 has disclosed an asleep mode for ONUs. In such asleep mode, the hardware components such as the optical modules in the receiving and sending directions are all disabled.

However, if an ONU is powered off or in asleep mode, it can be only activated locally on the ONU side. For example, the ONU can be periodically switched from the asleep mode to a sleep aware state, in which the receiving module and the sending module are in an enabled state. It is not possible to trigger a wake-up procedure from the optical line terminal (OLT) to wake up an ONU from the asleep mode. Incoming phone calls and emergency messages cannot be delivered in time.

The OLT may only awake the ONU till the ONU is switched to the sleep aware state. In the sleep aware state, the power consumed by the receiving module and the sending module cannot be saved.

There is thus a need for an improved apparatus and method to provide the possibility of awaking the ONU from OLT side while saving energy.

### Summary of the Invention

According to a first aspect of the invention, there is provided an apparatus for use in an Optical Network Unit, ONU, communicatively connected to an Optical Line Terminal, OLT, comprising means for: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to a second aspect of the invention, there is provided an apparatus for use in an OLT communicatively connected to a plurality of ONUs, comprising means for: varying an average output power of a PON downstream signal for a predetermined duration based on a determination of waking up at least one ONU from a deep sleep mode.

According to a third aspect of the invention, there is provided a method for use in an Optical Network Unit, ONU, communicatively connected to an Optical Line Terminal, OLT, comprising: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to a fourth aspect of the invention, there is provided a method for use in an Optical Line Terminal, OLT, communicatively connected to a plurality of Optical Network Units, ONUs, comprising: varying an average output power of a PON downstream signal for a predetermined duration based on a determination of waking up at least one ONU from a deep sleep mode

According to a fifth aspect of the invention, there is provided a computer program comprising instructions for causing an apparatus to perform at least the following: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to a sixth aspect of the invention, there is provided a computer program comprising instructions for causing an apparatus to perform at least the following: varying an average output power of a PON downstream signal for a predetermined duration based on a determination of waking up at least one ONU from a deep sleep mode.

According to a seventh aspect of the invention, there is provided an apparatus comprising at least one processor and at least one memory including computer program code, the at least one memory and the computer program code configured to with the at least one processor, cause the apparatus at least to perform: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to an eighth aspect of the invention, there is provided an apparatus comprising at least one processor and at least one memory including computer program code, the at least one memory and the computer program code configured to with the at least one processor, cause the apparatus at least to perform: varying an average output power of a PON downstream signal for a predetermined duration based on a determination of waking up at least one ONU from a deep sleep mode.

According to a ninth aspect of the invention, there is provided a non-transitory computer readable medium comprising program instructions for causing an apparatus to perform at least the following: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to a tenth aspect of the invention, there is provided a non-transitory computer readable medium comprising program instructions for causing an apparatus to perform at least the following: varying an average output power of a PON downstream signal for a predetermined duration based on a determination of waking up at least one ONU from a deep sleep mode.

According to an eleventh aspect of the invention, there is provided a computer readable medium comprising program instructions for causing an apparatus to perform at least the following: setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT; detecting a change in an average power based on the downstream signal received by the photodiode from the OLT; activating the data processing and control unit of the ONU based on the detected change.

According to a twelfth aspect of the invention, there is provided a computer readable medium comprising program instructions for causing an apparatus to perform at least the following: varying an average output power of a PON downstream signal for a predetermined duration based on a determination of waking up at least one ONU from a deep sleep mode.

According to the example embodiments, only a photodiode of the receiver circuit is kept active in the deep sleep mode, major part of the transceiver circuit is powered off. Various embodiments allow massive power saving while providing a possibility for waking up an ONU from the OLT side. Thereby unattainability is overcome. Meanwhile, the required modification to the current ONU and OLT is minimum, the cost for implementation is low.

### Brief description of the figures

For a more complete understanding of example embodiments of the present invention, reference is now made to the following descriptions taken in connection with the accompanying drawings in which:
Figure 1 shows a part of an exemplifying communication network in which examples of disclosed embodiments may be applied;
Figure 2 shows an example block diagram of an apparatus 200 according to an example embodiment;
Figure 3a shows an exemplary schematic view of a PON downstream signal transmitted by the OLT under the influence of the apparatus 200;
Figure 3b and 3c show schematic view of the envelope of the downstream signal depicted in Figure 3a;
Figure 4a shows an exemplary schematic view of another PON downstream signal transmitted by the OLT under the influence of the apparatus 200;
Figure 4b shows a schematic view of the envelope of the downstream signal depicted in Figure 4a;
Figure 5 shows an example block diagram of an ONU transceiver according to the state of the art;
Figure 6 shows an example block diagram of an ONU transceiver implementing an apparatus 300 according to an example embodiment;
Figure 7 shows an example block diagram of another ONU implementing an apparatus 301 according to an example embodiment;
Figure 8 shows a flow diagram according to example methods implementing various embodiments;
Figure 9 shows a block diagram depicting the apparatus 200, 300, 301 operating in accordance with various embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

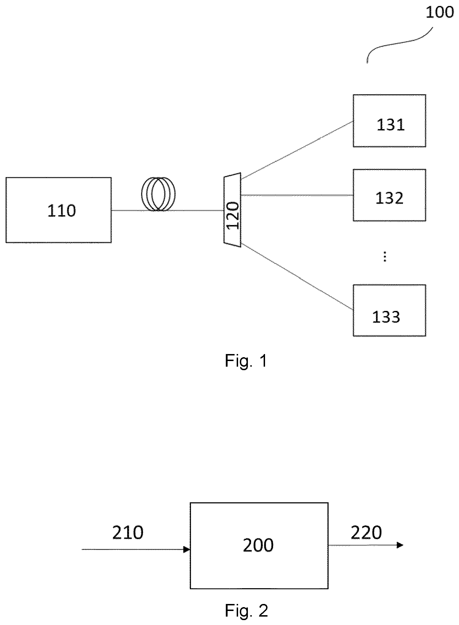

Figure 1 shows a part of an exemplifying communication network in which examples of disclosed embodiments may be applied.

As shown in Fig. 1 in a passive optical network, PON, 100, an OLT 110 at the network side is used to connect to a plurality of ONUs 131, 132, ..., 133 at the user side by means of an optical distribution network (ODN) or fiber plant 120 that contains optical fibers and splitters, but no active components. A skilled person shall understand the number of ONUs is not limited to the given example. The OLT 110 may be connected to for example up to 64 ONUs.

Figure 2 shows an example block diagram of an apparatus 200 according to an example embodiment.

The apparatus 200 is suitable for use in an OLT, for example the OLT 110 in Figure 1. Alternatively, the apparatus 200 may also be implemented outside the OLT and communicatively connected to the OLT.

The apparatus 200 is configured to vary an average output power of a PON downstream signal for a predetermined duration based on a determination of waking up at least one ONU from a deep sleep mode. In the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT.

Specifically, the apparatus 200 may receive an indication signal 210 for example from another function entity implemented inside or outside the OLT. The indication signal 210 indicates whether it is determined to wake up at least one ONU from the deep sleep mode.

The determination of waking up at least one ONU from the deep sleep mode may be carried out in various ways. For example, the OLT may determine to wake up an ONU based on a service type of the service packet that shall be send to the ONU. Specifically, for example, in case of incoming phone calls and emergency message, it may be determined that at least one ONU should be waked up. A skilled person also knows other approaches that may be used to determine whether or not at least one ONU shall be waked up from the deep sleep mode.

Optionally, the apparatus 200 may inform all active ONUs about entering an interval with small optical output power variations, allowing active ONUs to protect itself against negative impacts from power variations, for example by freezing equalizer taps, etc.

The apparatus 200 may be configured to output a control signal 220 that may be used to adjust the average output power of the PON downstream signal.

Specifically, the control signal 220 may cause the OLT to modify the drive level of the transmission laser diode by controlling the laser driver for direct modulated laser devices. In case Electro-Absorption Modulated Laser (EML) is used for transmission, both the DC level of the laser or even the amplitude for the modulator can be modified to implement the trigger signal. For transmission systems with booster amplifier (e.g. SOA), a variation in SOA gain would be feasible as well.

Generally, if the indication signal 210 indicates that at least one ONU should be waked up from the deep sleep mode, the apparatus 200 causes a variation in the average output power of a PON downstream signal for a predetermined duration. The average output power may refer to the signal level captured at the output of a low pass filter, when the downstream signal is provided to its input. There would be an intensity-change in the output of the low pass filtered downstream system data signal, when the average power is changed on a time scale much longer than the bit period of that of the downstream system data signal. Alternatively, the average output power may refer to the average output power of signal in a first time duration for example of 5 - 500 bit cycles. The predetermined duration for the variation of output power is longer than the first time duration, and may be for example in range of several µs up to ms or at least 1000 bit cycles.

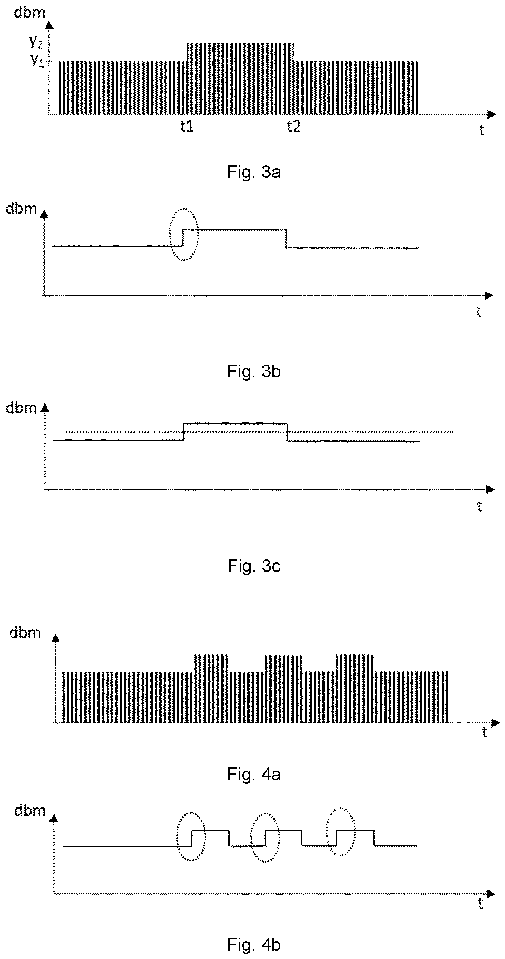

Figure 3a shows an exemplary schematic view of a PON downstream signal transmitted by the OLT under the influence of the apparatus 200.

In Figure 3a, the horizontal axis represents time, and the vertical axis represents the optical signal power of the PON downstream signal transmitted by the OLT under the influence of the apparatus 200.

It is assumed that binary modulation is used for downstream transmission. It can be seen from Figure 3a, in the time period t<t₁ and t>t₂, the downstream signal varies between 0 and y₁. Here, y₁ indicates the normal average output power of the downstream signal. In the time period t₁<t<t₂, the downstream signal varies between 0 and y₂. The upper limit of high signal level is increased. Here, y₂ indicates an increased average output power of the downstream signal.

Figure 3b and 3c show schematic view of the envelope of the downstream signal depicted in Figure 3a.

In the following, envelope of the PON downstream signal may be used interchangeably with the average output power of the PON downstream signal.

In the embodiment shown in Figure 3a, the apparatus 200 is configured to increase the average output power of the PON downstream signal based on the determination of waking up at least one ONU. Actually, both positive and negative variations in the power envelope will be possible. However, to keep the signal quality of the PON downstream signal, higher power levels compare to the normal signal intensity are preferred.

PON downstream signal as shown in Figure 3a may be used to wake up all the ONUs from deep sleep mode. If it is determined that only one or more particular ONU should be waked up from deep sleep mode, the apparatus 200 may be configured to vary the average output power of the PON downstream signal in a predetermined pattern corresponding to the one or more particular ONU.

Figure 4a shows an exemplary schematic view of another PON downstream signal transmitted by the OLT under the influence of the apparatus 200.

Figure 4b shows a schematic view of the envelope of the downstream signal depicted in Figure 4a.

The scale of Figures 4a and 4b is not necessarily identical with that in Figure 3.

As shown in Figures 4a-4b, a pattern can be recognized from the envelope of the PON downstream signal.

In one embodiment, different patterns may be assigned to different ONUs or different groups of ONUs. For example, based on a definition of timing, increased average output power may be used to represent bit "1", and normal average output power may be used to represent bit "0". The duration of each bit may be predefined and synchronized with ONUs. Thereby, different addresses may be assigned to each ONU or each group of ONUs.

In the example shown in Figures 4a-4b, an address of "101010" is indicated in the envelope of the downstream signal.

In another embodiment, different frequencies in the variations of the envelop may be used to address dedicated ONU as well.

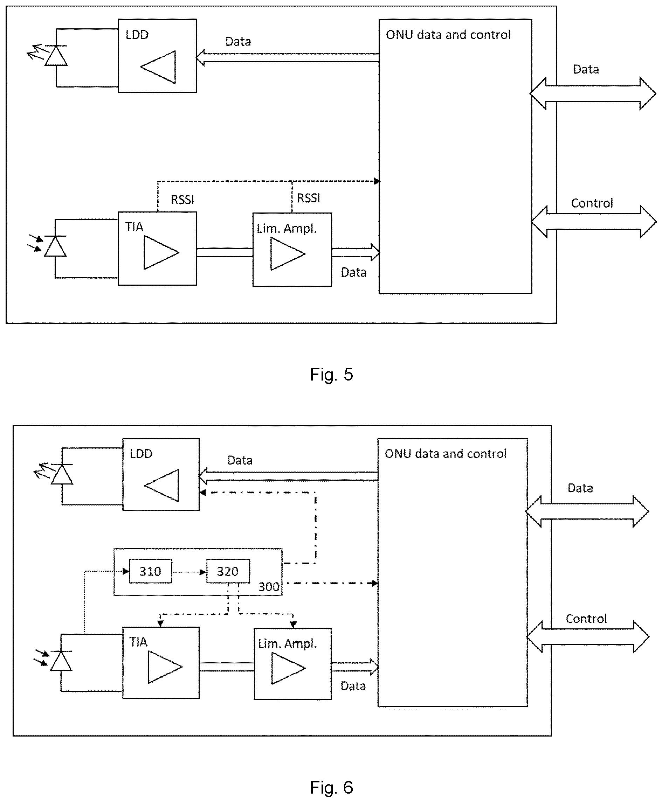

Figure 5 shows an example block diagram of an ONU transceiver according to the state of the art.

In Figure 5, the optical front end comprises an optical transmitter which is attached to the laser driver device (LDD) and comprises for the receiver section, a photodiode with transimpedance amplifier (TIA) and a limiting amplifier. The data processing and control unit, which is used to process the upstream and downstream data and to control the transceiver, is interfaced on one side with the optical front-end components and on the other side with the data and control interface to link the transmitter to the PON line card. In normal use, all components are active 24/7, no matter whether there is data traffic or not. In case there is no traffic, management packets and idle frames are still transmitted. The Received Signal Strength Indicator (RSSI) is a standardized interface connected to the PON management system. It is used to detect loss of signal, but could be used for other purposes, too.

Figure 6 shows an example block diagram of an ONU transceiver implementing an apparatus 300 according to an example embodiment.

In the embodiment shown in Figure 6, the apparatus 300 is implemented inside the ONU, for example the ONU 131, 132, 133 in Figure 1. Alternatively, in another embodiment, the apparatus 300 may also be implemented outside the ONU and communicatively connected to the ONU.

As shown in Figure 6, the apparatus 300 may comprise a wake-up detector unit 310 and a device power control unit 320 with individual power supply respectively. However, in another embodiment their functions may be integrated together in the apparatus 300, and the apparatus 300 may be implemented in a low power micro controller with independent power supply.

The device power control unit 320 may be configured to set the ONU into a deep sleep mode, wherein, in the deep sleep mode, a data processing and control unit of the ONU is powered off and a photodiode of the ONU is active, and wherein in active mode the photodiode is configured to receive a downstream signal from the OLT and the data processing and control unit is configured to process downstream signal received from the OLT.

Specifically, the determination of setting the ONU into the deep sleep mode may be carried out in various ways. For example, the OLT may determine to set an ONU into deep sleep mode and instruct the ONU to do so based on for example estimated traffic, etc. Alternatively, an ONU can make such decision as well, for example, based on monitoring the traffic data. In another example, setting the ONU into the deep sleep mode may also be manually triggered.

In the embodiment of Figure 6, only the photodiode of the receiver circuit and the apparatus 300 or the wake-up detector unit 310 (will be elaborated below) of the apparatus 300, drawn in solid line, are powered on during the deep sleep mode. All the other parts of the ONU, drawn in dotted line, including the data processing and control unit, the other parts of the receiver circuit, including TIA and the limiting amplifier, the potential digital signal processing elements and the transmitter circuit including the laser driver, are inactive or powered off.

The wake-up detector unit 310 may be configured to detect a change in an average power based on the downstream signal received by the photodiode in the ONU.

Specifically, an envelope detector may be used as the wake-up detector unit 310. As indicated by the dotted line with arrow in Figure 6, the wake-up detector unit 310 may directly receive the output of the photodiode.

Further reference is made back to Figure 3b and 3c, an envelope detector may be used to detect a change in step in the envelope, as indicated by the circle in Figure 3b. Alternatively, an envelope detector may be used to detect a change in level of the envelope, as indicated by the dotted line in Figure 3c.

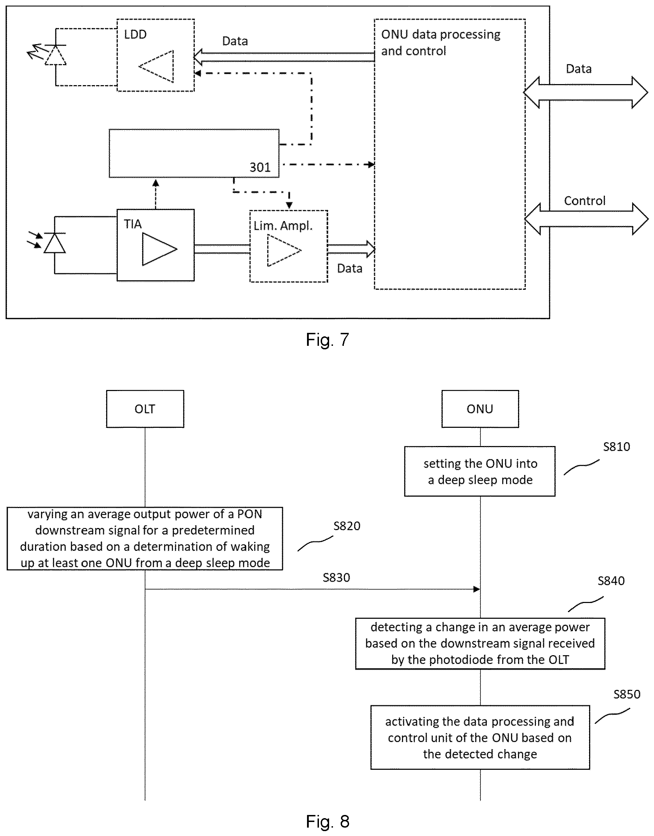

For the sake of saving power, an ultra-low power envelope detector may be used. A skilled person should understand, the lower the power consumption of the envelope detector, the lower sensitivity it provides. That means the duration of the variation in average output power of the downstream signal on the OLT side may be adjusted according to the sensitivity or the power consumption of the envelope detector on the ONU side. Although TIA may also provide the function of the envelope detector, which will be elaborated later with respect to Figure 7, the extra envelope detector may consume less power than the TIA.

In other implementations, the high-speed signal may be low pass filtered to remove the high frequency oscillations in other ways. For example, circuits with rectifier and smoothing capacitor or devices with much lesser bandwidth compared to the high-frequency components can be used, too.

Furthermore, in the embodiment of Figure 6, the device power control unit 320 may be kept inactive during the deep sleep mode. In one embodiment, the device power control unit 320 may be powered off during deep sleep mode.

The wake-up detector unit 310 may be configured to activate the device power control unit 320 based on the detected change. For example, as indicated by the dash line with arrow in Figure 6, the wake-up detector unit 310 may be configured to output a control signal in case it detects a variation in the average power of the downstream signal, for example a change in step or level. The control signal may be used to activate or power on the device power control unit 320.

The device power control unit 320 may be further configured to activate the data processing and control unit of the ONU based on the detected change. Thereby, the ONU leaves the deep sleep mode. Optionally, after the ONU is activated, at least part of the apparatus 300 may be powered off or deactivated.

Specifically, as indicated by the dotted dash line with arrow in Figure 6, the device power control unit 320 may send control signal to one or more unit among all the parts of the ONU transceiver which are inactive or powered off during the deep sleep mode, for example, the TIA, limiting amplifier of the receiver circuit, the data processing and control unit, the digital signal processing circuit and the laser driver of the transmitter circuit, etc. The respective part of the ONU may be powered on or activated in response to such control signal from the device power control unit 320.

Figure 7 shows an example block diagram of another ONU implementing an apparatus 301 according to an example embodiment.

In the embodiment shown in Figure 7, the function of the wake-up detector unit 310 and the device power control unit 320 are integrated together. In another embodiment, the wake-up detector unit 310 and the device power control unit 320 as described with respect to Figure 6 may also be implemented in the apparatus 301 as separate function units with individual power supply.

In the embodiment shown in Figure 7, the apparatus 301 may be configured to keep the TIA connected downstream of the photodiode active during the deep sleep mode.

As indicated by the dash line with arrow in Figure 7, the apparatus 301 may be further configured to receive a photodiode monitor output or a received signal strength indicator, RSSI, from the TIA. In another embodiment, the limiting amplifier may also be kept active during deep sleep mode and the RSSI may be received from the limiting amplifier. Alternatively, a linear TIA can be applied in case digital signal processing is applied at the receiver.

The apparatus 301 may be further configured to detect the change in the average power based on the photodiode monitor output or the RSSI. Specifically, the RSSI detector circuit in the TIA and can be reused to get the signal envelope. The apparatus 301 may detect the variation in the signal envelope similar as described with respect to apparatus 300 in Figure 6.

In case the apparatus 301 detects a variation in the average power of the downstream signal, the apparatus 301 may be configured to output a control signal, as indicated by the dotted dash line with arrow in Figure 7, to activate the data processing and control unit of the ONU, and at least one or more units among other parts of the ONU transceiver that are powered off or inactive during deep sleep mode, like the limiting or linear amplifier and the laser driver etc.

Reference is made back to Figure 4b, the apparatus 301 or the wake-up detector unit 310 may be further configured to detect a pattern from the change in the average power.

Specifically, pattern may refer to the way of variation in the average power of the downstream signal. Individual pattern may be assigned to respective ONU or group of ONUs connected to the OLT. For example, addresses in form of different bit sequence may be assigned to each ONU or each group of ONUs, such as ONU ID or a simplified address.

Referring to Figure 4b, an envelope detector or the TIA may be used to detect multiple steps in the average power of the downstream signal, as shown in the circles in Figure 4b. Specifically, based on a predefined timing, the apparatus 301 or the wake-up detector unit 310 may obtain bit sequence from the amplitude of the envelope. The timing information may be defined by the OLT and communicated to the ONU and thus the apparatus 300 or 301, when the ONU is in active state. The timing information may be synchronized between the OLT and the ONU in other ways.

In the example of Figure 4b, the apparatus 301 or the wake-up detector unit 310 may obtain a bit sequence of "101010" from the envelope of the downstream signal. Then it may determine whether the detected bit sequence matches with the address assigned to the ONU. If there is a match, it may activate the other parts of the ONU which are powered off during deep sleep mode.

Alternatively, instead of address in form of bit sequence, different frequencies may be assigned to respective ONU or group of ONUs realized by repetitive periods of different length of consecutive identical digits in the envelope. For example, in case the apparatus 301 or the wake-up detector unit 310 detects a variation in a first frequency in the amplitude of the envelope, it may determine whether the first frequency matches with the frequency corresponding to the ONU. If there is a match, it may activate the other parts of the ONU which are powered off during deep sleep mode.

Generally, the apparatus 300, 301 may be configured to activate at least the data processing and control unit of the ONU based on a determination that the detected pattern matches with a predetermined pattern corresponding to the ONU.

In one embodiment, the wake-up detector unit 310 and the device power control unit 320 as described with respect to Figure 6 are implemented as separate function units with individual power supply, and the device power control unit 320 is kept inactive during the deep sleep mode, the wake-up detector unit 310 may be further configured to activate the device power control unit 320 based on the determination that the detected pattern matches with the predetermined pattern corresponding to the ONU.

According to various embodiments, the required modification to the current ONU and OLT is minimum, for example adding a low power micro controller. Meanwhile, major parts of the transceiver circuit may be powered off in the deep sleep mode, which allows massive power saving while keeping the users available for incoming calls and emergency messages.

Figure 8 shows a flow diagram according to example methods implementing various embodiments.

The methods may be implemented in the PON system as shown in Figure 1. In the example of Figure 8, method steps S810, S840, S850 are implemented by an ONU 131, 132, or 133, and method step S820 is implemented by the OLT 110.

In method step S810, the ONU is set into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT;

In step S820, the OLT varies an average output power of a PON downstream signal for a predetermined duration based on a determination of waking up at least one ONU from a deep sleep mode. In step S830, the downstream signal with variation in the average output power is transmitted from OLT to the ONU.

In step S840, the ONU detects a change in an average power based on the downstream signal received by the photodiode from the OLT.

In step S850, the ONU activates the data processing and control unit of the ONU based on the detected change.

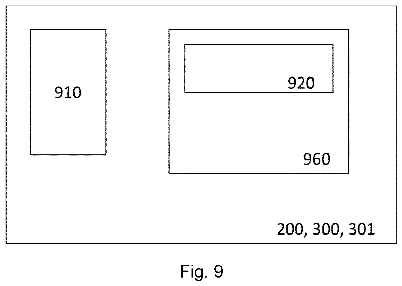

Figure 9 shows a block diagram depicting the apparatus 200, 300, or 301 operating in accordance with various embodiment.

The apparatus 200, 300, or 301 includes a processor 910 and a memory 960. In other examples, the apparatus 200 may comprise multiple processors.

In the example of Figure 9, the processor 910 is a control unit operatively connected to read from and write to the memory 960. The processor 910 may also be configured to receive control signals received via an input interface and/or the processor 910 may be configured to output control signals via an output interface. In an example embodiment the processor 910 may be configured to convert the received control signals into appropriate commands for controlling functionalities of the apparatus.

The memory 960 stores computer program instructions 920 which when loaded into the processor 910 control the operation of the apparatus 200, 300, or 301 as explained above. In other examples, the apparatus 200, 300, or 301 may comprise more than one memory 960 or different kinds of storage devices.

Computer program instructions 920 for enabling implementations of example embodiments of the invention or a part of such computer program instructions may be loaded onto the apparatus 200, 300, or 301 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200, 300, or 301 comprises means, wherein the means comprises at least one processor 910, at least one memory 960 including computer program code 920, the at least one memory 960 and the computer program code 920 configured to, with the at least one processor 910, cause the performance of the apparatus 200, 300, or 301.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 9. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (300, 301) for use in an Optical Network Unit, ONU, communicatively connected to an Optical Line Terminal, OLT, comprising means for:
- setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT;
- detecting a change in an average power based on the downstream signal received by the photodiode from the OLT;
- activating the data processing and control unit of the ONU based on the detected change.

2. The apparatus (300, 301) according to the preceding claim, comprising:
- a wake-up detector unit (310) configured to detect the change in the average power based on the downstream signal received by the photodiode, and
- a device power control unit (320) configured to activate the data processing and control unit of the ONU based on the detected change.

3. The apparatus (300, 301) according to the preceding claim, wherein the means are further configured for:
- keeping the device power control unit (320) inactive during the deep sleep mode,
- activating the device power control unit (320) based on the detected change.

4. The apparatus (300, 301) according to any preceding claim, wherein the means are further configured for:
- keeping a transimpedance amplifier, TIA, connected downstream of the photodiode, active during the deep sleep mode;
- receive a photodiode monitor output or a received signal strength indicator, RSSI, from the TIA or the limiting amplifier;
- detecting the change in the average power based on the photodiode monitor output or the RSSI.

5. The apparatus (300, 301) according to any preceding claim, wherein the change in the average power is an increase in the average power.

6. The apparatus (300, 301) according to any preceding claim, wherein the means are further configured for:
- detecting a pattern from the change in the average power;
- activating the data processing and control unit of the ONU based on a determination that the detected pattern matches with a predetermined pattern corresponding to the ONU.

7. The apparatus (300, 301) according to claims 3 and 6, wherein the means are further configured for:
- activating the device power control unit based on the determination that the detected pattern matches with the predetermined pattern corresponding to the ONU.

8. The apparatus (300, 301) according to any preceding claim, wherein, in the deep sleep mode, an optical transmitter of the ONU is inactive, and
wherein the means are further configured for:
- activating the optical transmitter of the ONU based on the detected change.

9. An apparatus (200) for use in an OLT communicatively connected to a plurality of ONUs, comprising means for:
- varying an average output power of a PON downstream signal for a predetermined duration based on a determination of waking up at least one ONU from a deep sleep mode.

10. The apparatus (200) according to the preceding claim, wherein the means are further configured for:
- increasing the average output power of the PON downstream signal based on the determination of waking up at least one ONU.

11. The apparatus (200) according to any preceding claim, wherein the means are further configured for:
- determining to wake up a first ONU,
- varying the average output power of the PON downstream signal in a predetermined pattern corresponding to the first ONU.

12. A method for use in an Optical Network Unit, ONU, communicatively connected to an Optical Line Terminal, OLT, comprising:
- setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT;
- detecting a change in an average power based on the downstream signal received by the photodiode from the OLT;
- activating the data processing and control unit of the ONU based on the detected change.

13. A method for use in an Optical Line Terminal, OLT, communicatively connected to a plurality of Optical Network Units, ONUs, comprising:
- varying an average output power of a PON downstream signal for a predetermined duration based on a determination of waking up at least one ONU from a deep sleep mode.

14. A computer program comprising instructions for causing an apparatus to perform at least the following:
- setting the ONU into a deep sleep mode, wherein, in the deep sleep mode, a data processing and control unit of the ONU is powered off and a photodiode of the ONU is active, and wherein the photodiode is configured to receive a downstream signal from the OLT and the data processing and control unit is configured to process downstream signal received from the OLT;
- detecting a change in an average power based on the downstream signal received by the photodiode from the OLT;
- activating the data processing and control unit of the ONU based on the detected change.

15. A computer program comprising instructions for causing an apparatus to perform at least the following:
- varying an average output power of a PON downstream signal for a predetermined duration based on a determination of waking up at least one ONU from a deep sleep mode.
